# EUROPEAN PATENT SPECIFICATION

(11) **EP 2 226 962 B1**
(45) Date of publication and mention of the grant of the patent: **04.01.2017**
(21) Application number: 10167451.3
(22) Date of filing: 06.04.2005
(51) Int. Cl.: H04W 52/02, H04L 1/18

(54) **Method and apparatus for selectively enabling reception of downlink signaling channels**
Verfahren und Vorrichtung zur selektiven Ermöglichung des Empfangs von Abwärtsstrecken -Signalisierungskanälen
Procédé et appareil d'activation sélective de la réception de canaux de signalisation à liason descendante

(30) Priority: 29.04.2004 US 566620 P
(43) Date of publication of application: 08.09.2010
(62) Divisional of application: 05731494.0
(73) Proprietor: InterDigital Technology Corporation, Wilmington, DE 19809 (US)
(72) Inventor: Terry, Stephen, Northport, NY 11768 (US); Zhang, Gudong, Farmingdale, NY 11735 (US); Dick, Stephen G., Nesconset, NY 11767 (US)
(74) Representative: Awapatent AB

(56) References cited:
- EP-A- 1 180 907
- "3 GPP TR 25.896 v6.0.0 : Feasibility Study for Enhanced Uplink for UTRA FDD (Release 6)" 3GPP TR 25.896 V6.0.0, XX, XX, 1 March 2004 (2004-03-01), pages 1-179, XP002360421
- MOTOROLA: "AH64: Uplink HARQ Schemes and SHO considerations" 3GPP DRAFT; R1-030068, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Diego, USA; 20030107, 7 January 2003 (2003-01-07), XP050097196 [retrieved on 2003-01-07]
- MOTOROLA ET AL: "Enhanced Uplink Dedicated Transport Channel; Text proposal for the TR-Section 7.5" 3GPP DRAFT; R1-030359, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 18 February 2003 (2003-02-18), pages 1-4, XP002385130
- QUALCOMM: "Channel Structure for Consideration in Enhanced Uplink" 3GPP DRAFT; R1-03-0273 - UL STRUCTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Tokyo; 20030218, 18 February 2003 (2003-02-18), XP050097271 [retrieved on 2003-02-18]

## Description

### FIELD OF INVENTION

The present invention is related to a wireless communication system including a wireless transmit/receive unit (WTRU) and at least one Node-B. More particularly, the present invention is a method and apparatus for selectively enabling reception of downlink (DL) enhanced uplink (EU) signaling channels established between the WTRU and the Node-B(s).

### BACKGROUND

Methods for improving uplink (UL) coverage, throughput and transmission latency are being investigated in Release 6 (R6) of the 3rd Generation Partnership Project (3GPP). In order to successfully implement these methods, the scheduling and assigning of UL radio resources have been moved from a radio network controller (RNC) to a Node-B such that the Node-B can make decisions and manage UL radio resources on a short-term basis more efficiently than the RNC, even if the RNC retains overall control over the Node-B.

EU operation requires transmitting information such as UL channel allocations and transmission feedback information to the WTRU via DL EU signaling channels. The WTRU monitors the DL EU signaling channels for the reception of channel allocations and transmission feedback information.

An example of enhanced uplink operation is shown in "AH64: Text proposal for the TR - Section 7.5", Tdoc#R1-03-0359 (XP2385130).

A method and apparatus is desired for controlling reception of the DL EU signaling channels such that they are enabled only when required.

### SUMMARY

The present invention provides a method and a WRTU as defined in claims 1 and 8, respectively. Preferred embodiments are defined in the dependent claims.

During the operation of an enhanced dedicated channel (E-DCH), a WTRU monitors at least one DL EU signaling channel established between the WTRU and at least one Node-B only when it is necessary, based on the WTRU's knowledge of at least one established standard procedure. The WTRU coordinates and consolidates DL signaling channel reception requirements of a plurality of channel allocation and/or data transmission procedures carried out by the WTRU in accordance with the established standard procedure. The WTRU determines whether to enable reception of at least one specific DL signaling channel based on the consolidated DL signaling channel reception requirements.

In accordance with the present invention, the WTRU does not have to continuously enable the reception of the DL EU signaling channel during EU operation. Instead, the WTRU may selectively turn on and off, (i.e., enable and disable), reception of at least one specific DL EU signaling channel, thus reducing WTRU processing requirements and reducing the probability of misinterpretation of DL signaling.

### BRIEF DESCRIPTION OF THE DRAWINGS

A more detailed understanding of the invention may be had from the following description of a preferred example, given by way of example and to be understood in conjunction with the accompanying drawing wherein:
Figure 1 is a block diagram of a wireless communication system operating in accordance with the present invention;
Figure 2 is a flow diagram of a process including method steps for selectively enabling reception of at least one DL EU signaling channel during EU operation when the WTRU sends an EU channel allocation request and is expecting to receive scheduling information in accordance with one embodiment of the present invention; and
Figure 3 is a flow diagram of a process including method steps for selectively enabling reception of at least one DL EU signaling channel when the WTRU sends E-DCH data and is expecting to receive feedback information in accordance with another embodiment of the present invention.

### DETAILED DESCRIPTION OF THE PREFERRED EMBODIMENTS

Hereafter, the terminology "WTRU" includes but is not limited to a user equipment (UE), a mobile station, a fixed or mobile subscriber unit, a pager, or any other type of device capable of operating in a wireless environment. When referred to hereafter, the terminology "Node-B" includes but is not limited to a base station, a site controller, an access point or any other type of interfacing device in a wireless environment.

The features of the present invention may be incorporated into an integrated circuit (IC) or be configured in a circuit comprising a multitude of interconnecting components.

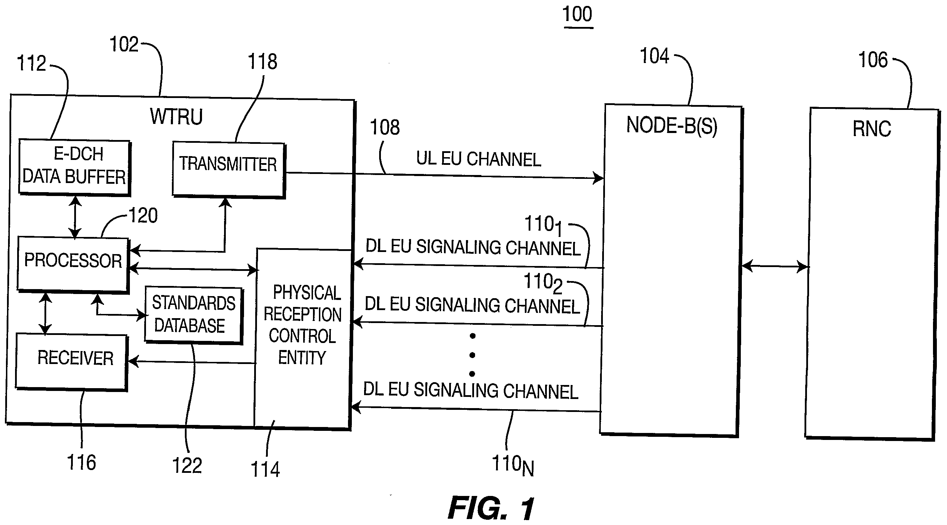

Figure 1 is a block diagram of a wireless communication system 100 operating in accordance with the present invention. The system 100 includes a WTRU 102, at least one Node-B 104 and an RNC 106. The WTRU 102 includes an E-DCH data buffer 112, a physical reception control entity 114, a receiver 116, a transmitter 118, a processor 120 and a standards database 122.

The transmitter 118 in the WTRU 102 transmits an EU channel allocation request, (i.e., a rate request), to the Node-B(s) 104 through a UL EU channel 108 for EU transmission to the Node-B 104. The EU channel allocation request may include scheduling information. The scheduling information may include traffic volume measurement

(TVM) information of E-DCH data stored in the buffer 112 of the WTRU 102 and available EU transmit power information.

After the EU channel allocation request is transmitted, the receiver 116 in the WTRU 102 monitors a plurality of DL EU signaling channels 110₁, 110₂,..., 110_{N} for channel allocation information via the physical reception control entity 114. The Node-B(s) 104 responds to the EU channel allocation request with UL channel allocation information through one of the DL EU signaling channels 110₁-_{N}.

The system 100 is configured such that both UL signaling and E-DCH data are transmitted from the WTRU 102 to the Node-B(s) 104 via the UL EU channel 108. After receiving scheduling information for channel allocation from the Node-B(s) 104 through at least one of the DL EU signaling channels 110₁-_{N}, the transmitter 118 in the WTRU 102 transmits E-DCH data through the allocated UL EU channel 108. The receiver 116 in the WTRU 102 then monitors the DL EU signaling channel(s)
110₁-_{N} for expected E-DCH data feedback information.

In response to receiving the E-DCH data, the Node-B(s) 104 transmits E-DCH data feedback information to the WTRU 102 through the DL EU signaling channels 110₁-_{N}. The feedback information includes either an acknowledgement (ACK) message or a non-acknowledgement (NACK) message, depending on the success or failure of the Node-B(s) 104 decoding the E-DCH data sent over the UL EU channel 108 by the WTRU 102. The Node-B(s) 104 may also transmit further channel allocation information in response to the E-DCH data transmission. Such further information may be included in the feedback information or may be sent as a separate transmission over the DL EU signaling channels 110₁-_{N}.

The status of active EU procedures in the WTRU 102 may used to provide input to the physical reception control entity 114 of the WTRU 102. The physical reception control entity 114 communicates with a physical layer process to selectively enable and disable reception of the DL EU signaling channels 110₁-_{N}.

In accordance with the present invention, the physical reception control entity 114 in the WTRU 102 disables reception, (i.e., ceases monitoring), of the DL EU signaling channels 110₁-_{N} when it is not required by EU signaling procedures known to the WTRU 102. During periods when the WTRU 102 is not required to receive the DL EU signaling channels 110₁-_{N}, the processing requirements and power consumption of the WTRU 102 are reduced, and the possibility of false interpretation of DL signaling is avoided.

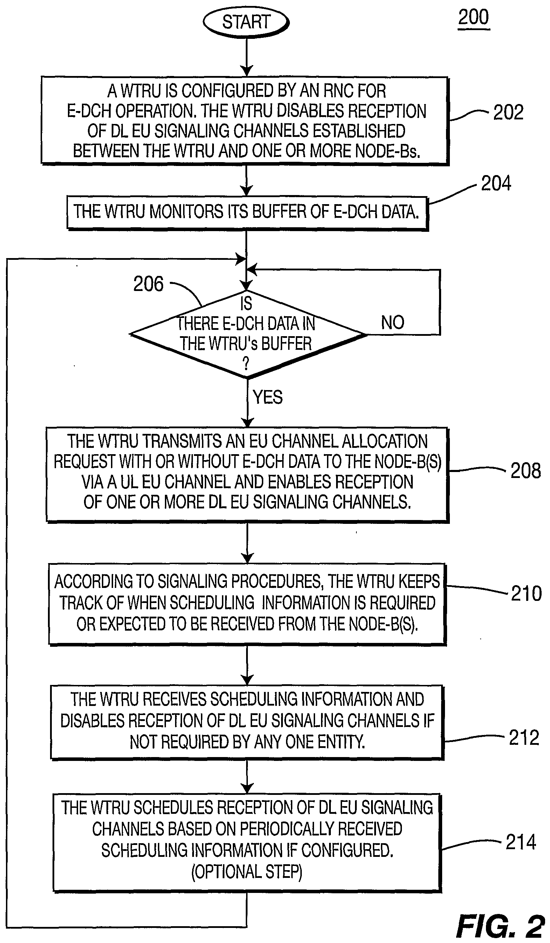

Figure 2 is a flow diagram of a process 200 including method steps for selectively enabling reception of at least one DL EU signaling channel 110₁-_{N} during EU transmission in accordance with the present invention. In step 202, the WTRU 102 is configured by the RNC 106 for E-DCH operation, whereby the UL EU channel 108 and the DL EU signaling channel(s) 110₁-_{N} are established between the WTRU 102 and the Node-B(s) 104. The WTRU 102 is not required to enable the reception of its DL EU signaling channel(s) 110₁-_{N} immediately following configuration in the WTRU 102. Thus, the physical reception control entity 114 in the WTRU 102 disables reception of DL EU signal channel(s) 110₁-_{N}.

Still referring to Figure 2, after the WTRU 102 is configured for E-DCH operation at step 202, the WTRU 102 monitors its buffer 112 of E-DCH data (step 204). If, at step 206, it is determined by the WTRU 102 that there is no E-DCH data in the buffer 112, the WTRU 102 continues to monitor the buffer 112, and reception of the DL EU signaling channels 110₁-_{N} remains disabled at step 204. If, at step 206, it is determined by the WTRU 102 that there is E-DCH data waiting (i.e., queued) for transmission via the UL EU channel 108, the WTRU 102 transmits an EU channel allocation request with or without E-DCH data to the Node-B(s) 104 via the UL EU channel 108 and enables reception of at least one DL EU signaling channel 110₁-_{N} (step 208). The WTRU 102 may optionally enable reception of DL EU signaling channel(s) 110₁-_{N} after a predetermined or calculated delay. The EU channel allocation request may include scheduling information such as TVM information and available EU transmit power information.

Operation of E-DCH requires radio resource allocations to be scheduled and signaled by the Node-B(s) 104 to the WTRU 102 in response to an EU channel allocation request transmitted by the WTRU 102. According to established signaling procedures, the WTRU 102 keeps track of when E-DCH data transmission scheduling information including EU channel allocations is required or expected to be received from the Node-B(s) on at least one DL EU signaling channel 110₁-_{N} based on information indicating when the EU channel allocation request was transmitted by the WTRU 102 (step 210).

In step 212, the WTRU 102 receives the required or expected scheduling information from the Node-B(s) over the DL EU signaling channel(s) 110₁-_{N} and then, if not required by any one entity, the physical reception control entity 114 disables reception of DL EU signaling channel(s) 110₁-_{N}. Optionally, in step 214, the WTRU 102 schedules reception of DL EU signaling channel(s) 110₁-_{N} based on periodically received DL EU signaling channel scheduling information if configured. Reception of specific DL EU signaling channel(s) 110₁-_{N} is enabled, depending on which EU signaling procedures are active in the WTRU 102.

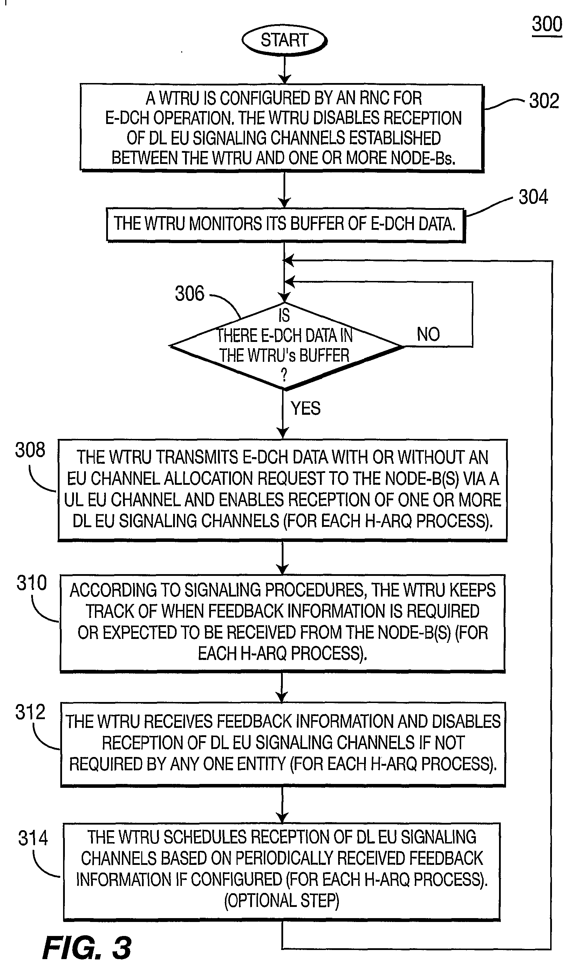

Figure 3 is a flow diagram of a process 300 including method steps for selectively enabling reception of the DL EU signaling channels 110₁-_{N} when the WTRU 102 sends E-DCH data and is expecting to receive feedback information in accordance with another embodiment of the present invention. In step 302, the WTRU 102 is configured by the RNC 106 for E-DCH operation whereby the UL EU channel 108 and the DL EU signaling channel(s) 110₁-_{N} are established between the WTRU 102 and the Node-B(s) 104. The WTRU 102 is not required to enable the reception of its DL EU signaling channel(s) 110₁-_{N} immediately following the E-DCH operation configuration of the WTRU 102. Thus, the physical reception control entity 114 in the WTRU 102 disables reception of DL EU signal channel(s) 110₁-_{N}.

Still referring to Figure 3, after the WTRU 102 is configured to perform an E-DCH operation at step 302, the WTRU 102 monitors its buffer 112 of E-DCH data (step 304). If at step 306 it is determined by the WTRU 102 that there is no E-DCH data in the buffer 112, the WTRU 102 continues to monitor the buffer 112, and reception of the DL EU signaling channel(s) 110₁-_{N} remains disabled at step 304.

Steps 308, 310, 312 and 314 of process 300 may be performed for each of a plurality of several hybrid-automatic repeat request (H-ARQ) processes operating in parallel in the WTRU. If at step 306 it is determined by the WTRU 102 that there is E-DCH data waiting (i.e., queued) for transmission via the UL EU channel 108, for each H-ARQ process, the WTRU 102 transmits E-DCH data with or without an EU channel allocation request to the Node-B(s) 104 via the UL EU channel 108 and enables reception of DL EU signaling channel(s) 110₁-_{N} (step 308). The WTRU 102 may optionally enable reception of DL EU signaling channel(s) 110₁-_{N} after a predetermined or calculated delay.

According to established signaling procedures, the WTRU 102 keeps track of when feedback information is required or expected to be received from the Node-B(s) 104 for each H-ARQ process (step 310). In step 312, the WTRU receives feedback information from the Node-B(s) 104 and disables reception of the DL EU signaling channel(s) 110₁-_{N} if not required by any one entity. Optionally, in step 314, the WTRU 102 schedules reception of the DL EU signaling channel(s) 110₁-_{N} based on periodically received feedback information if configured. Reception of specific DL EU signaling channel(s) 110₁-_{N} is enabled, depending on which EU signaling procedures are active in the WTRU 102.

The WTRU 102 keeps track of when scheduling information including EU channel allocations is expected to be received on DL EU signaling channels 110₁-_{N} based on information indicating when the WTRU 102 transmitted the E-DCH data. DL EU signaling channels 110₁-_{N} are also used to provide the WTRU 102 feedback information from the Node-B(s) 104 for E-DCH transmissions. Since feedback transmitted to the WTRU is in response to a specific action of the WTRU, the time of feedback information reception at the WTRU can be accurately determined by the WTRU. Feedback information transmitted by the Node-B(s) 104 via the DL EU signaling channel(s) 110₁-_{N} may consist of H-ARQ acknowledgements and/or UL channel allocation information. One example of WTRU reception of feedback channels could be H-ARQ information channels (HICHs) and relative grant channels (RGCHs) or absolute grant channels (AGCH) in 3GPP.

The H-ARQ operation may be either synchronous or asynchronous. In synchronous operation, the WTRU 102 knows exactly when the WTRU 102 may receive the feedback (ACK or NACK) via DL EU signaling channel(s) 110₁-_{N} and the WTRU 102 enables reception of the DL EU signaling channel(s) 110₁-_{N} in accordance with a preconfigured schedule. With asynchronous H-ARQ operation, the WTRU enables reception of the DL EU signaling channel(s) 110₁-_{N} for a predetermined time period following the EU transmission for receiving the feedback.

Channel allocation feedback may also be transmitted to the WTRU 102 from the Node-B(s) 104 on DL EU signaling channel(s) 110₁-_{N}. The WTRU 102 may also enable reception of DL EU signaling channel(s) 110₁-_{N} for this channel allocation feedback information. EU channel allocation procedures known to the WTRU 102 allow the WTRU 102 to schedule reception of this information. The channel allocation feedback may either be synchronized with the H-ARQ feedback, send over a predetermined period, or have a specified periodic repetition that the WTRU 102 can schedule reception for.

If the WTRU 102 does not send a channel allocation request to the Node-B(s) 104, but all previous EU data transmission requests sent by the WTRU 102 have been serviced by the Node-B(s) 104, and feedback information was received from the Node-B for all outstanding H-ARQ transmissions, then the WTRU 102 disables the reception of the DL EU signaling channel(s) 110₁-_{N}.

In one embodiment, the WTRU 102 sends at least one channel allocation request to a plurality of Node-Bs 104 via at least one UL channel 108, and the Node-Bs send channel allocation information to the WTRU 102 via respective downlink (DL) signaling channels 110₁-_{N} in response to receiving the channel allocation request.

The processor 120 in the WTRU 102 coordinates and consolidates DL signaling channel reception requirements of a plurality of channel allocation procedures carried out by the WTRU 102 in accordance with at least one established standard procedure stored in the standards database 122, and determines whether or not to enable reception of specific ones of the DL signaling channels 110₁-_{N} based on the consolidated DL signaling channel reception requirements. The standards database 120 is in communication with the processor 120 and provides the processor 120 with information associated with at least one established standard procedure. The transmitter 118 is in communication with the processor 120 and sends at least one channel allocation request to the Node-Bs 104 via at least one UL channel 108. The receiver 116 is in communication with the processor 120 and receives channel allocation information from the Node-Bs 104 over the DL signaling channels 110₁-_{N}. The physical reception control entity 114 is in communication with the processor 120 and the receiver 116. The physical reception control entity 114 enables or disables reception of specific ones of the DL signaling channels 110₁-_{N} based on the determination made by the processor 120.

In another embodiment, the WTRU 102 sends at least one data transmission to a plurality of Node-Bs 104 via at least one UL channel 108, and the Node-Bs 104 send data transmission feedback information to the WTRU 102 via respective downlink (DL) signaling channels 110₁-_{N} in response to receiving the data transmission.

The processor 120 in the WTRU 102 coordinates and consolidates DL signaling channel reception requirements of a plurality of data transmission procedures carried out by the WTRU in accordance with at least one established standard procedure stored in the standards database 122, and determines whether or not to enable reception of specific ones of the DL signaling channels 110₁-_{N} based on the consolidated DL signaling channel reception requirements. The E-DCH data buffer 112 is in communication with the processor 120 and queues data to be included in at least one data transmission sent by the WTRU 102 to the Node-Bs 104 via at least one UL channel 108. The transmitter 118 is in communication with the processor and sends the at least one data transmission to the Node-Bs 104. The receiver 116 is in communication with the processor 120 and receives data transmission feedback information from the Node-Bs 104 over the DL signaling channels 110₁-_{N}. The physical reception control entity 114 is in communication with the processor 120 and the receiver 116. The physical reception control entity 114 enables or disables reception of specific ones of the DL signaling channels 110₁-_{N} based on the determination made by the processor 120.

In yet another embodiment, the WTRU 102 sends at least one channel allocation request and E-DCH data to a plurality of Node-Bs 104 via at least one UL channel 108, and the Node-Bs send channel allocation information and data feedback information associated with the E-DCH data to the WTRU 102 via respective downlink (DL) signaling channels 110₁-_{N} in response to receiving the at least one channel allocation request and E-DCH data.

The processor 120 in the WTRU 102 coordinates and consolidates DL signaling channel reception requirements of a plurality of channel allocation procedures and data transmission procedures carried out by the WTRU 102 in accordance with at least one established standard procedure stored in the standards database 122, and determines whether or not to enable reception of specific ones of the DL signaling channels 110₁-_{N} based on the consolidated DL signaling channel reception requirements. The standards database 120 is in communication with the processor 120 and provides the processor 120 with information associated with at least one established standard procedure. The transmitter 118 is in communication with the processor 120 and sends at least one channel allocation request and E-DCH data to the Node-Bs 104 via at least one UL channel 108. The receiver 116 is in communication with the processor 120 and receives channel allocation information from the Node-Bs 104 over the DL signaling channels 110₁-_{N}. The physical reception control entity 114 is in communication with the processor 120 and the receiver 116. The physical reception control entity 114 enables or disables reception of specific ones of the DL signaling channels 110₁-_{N} based on the determination made by the processor 120.

### Examples

1. In a wireless communication system including a wireless transmit/receive unit (WTRU) and a plurality of Node-Bs, the WTRU sending at least one channel allocation request to the Node-Bs via at least one uplink (UL) channel, and the Node-Bs sending channel allocation information to the WTRU via respective downlink (DL) signaling channels in response to receiving the channel allocation request, a method comprising:
   (a) the WTRU coordinating and consolidating DL signaling channel reception requirements of a plurality of channel allocation procedures carried out by the WTRU in accordance with at least one established standard procedure known to the WTRU; and
   (b) the WTRU determining whether to enable reception of at least one specific DL signaling channel based on the consolidated DL signaling channel reception requirements.
2. The method of example 1 wherein the at least one
   established standard procedure specifies when channel allocation information is expected to be received from at least one of the Node-Bs over at least one specific DL signaling channel.
3. The method of example 1 further comprising:
   (c) the WTRU receiving expected channel allocation information periodically; and
   (d) the WTRU scheduling enablement of reception of at least one DL signaling channel based on the periodicity of received channel allocation information.
4. The method of example 1 wherein the Node-Bs are associated with at least one cell.
5. The method of example 1 wherein the reception of at least one specific DL signaling channel is enabled during a specific radio frame or subframe.
6. The method of example 1 wherein the reception of at least one specific DL signaling channel is enabled during at least one specific scheduled time or time period.
7. The method of example 6 wherein the at least one established standard procedure designates the at least one specific scheduled time or time period.
8. The method of example 1 wherein reception of at least one specific DL signaling channel is enabled after the channel allocation request is sent to the Node-Bs by the WTRU.
9. The method of example 1 wherein the reception of at least one specific DL signaling channel is enabled or disabled on a periodic basis.
10. The method of example 9 wherein the periodic basis is
   designated by the at least one established standard procedure.
11. The method of example 1 wherein reception of at least one specific DL signaling channel is enabled or disabled by the WTRU based on the status of each active channel allocation procedure.
12. The method of example 1 wherein the channel allocation request sent by the WTRU includes enhanced dedicated channel (E-DCH) data that was queued in a buffer within the WTRU.
13. The method of example 1 wherein the WTRU disables reception of at least one DL signaling channel when reception of channel allocation information is not expected by the WTRU and reception of the at least one DL signaling channel is not required by the at least one established standard procedure.
14. The method of example 1 wherein the channel allocation request includes at least one traffic volume measurement (TVM) indicator.
15. In a wireless communication system including a wireless transmit/receive unit (WTRU) and a plurality of Node-Bs, the WTRU sending at least one data transmission to the Node-Bs via at least one uplink (UL) channel, and the Node-Bs sending data transmission feedback information to the WTRU via respective downlink (DL) signaling channels in response to receiving the data transmission, a method comprising:
   (a) the WTRU coordinating and consolidating DL signaling channel reception requirements of a plurality of data transmission procedures carried out by the WTRU in accordance with at least one established standard procedure known to the WTRU; and
   (b) the WTRU determining whether to enable reception of at least one specific DL signaling channel based on the consolidated DL signaling channel reception requirements.
16. The method of example 15 wherein the at least one established standard procedure specifies when data transmission feedback information is expected to be received from at least one of the Node-Bs over at least one specific DL signaling channel.
17. The method of example 15 further comprising:
   (c) the WTRU receiving expected data transmission feedback information periodically; and
   (d) the WTRU scheduling enablement of reception of at least one DL signaling channel based on the periodicity of received data transmission feedback information.
18. The method of example 15 wherein the Node-Bs are associated with at least one cell.
19. The method of example 15 wherein the reception of at least one specific DL signaling channel is enabled during a specific radio frame or subframe.
20. The method of example 15 wherein the reception of at least one specific DL signaling channel is enabled during at least one specific scheduled time or time period.
21. The method of example 20 wherein the at least one established standard procedure designates the at least one specific scheduled time or time period.
22. The method of example 15 wherein reception of at least one specific DL signaling channel is enabled after the data transmission is sent to the Node-Bs by the WTRU.
23. The method of example 15 wherein the reception of at least one specific DL signaling channel is enabled or disabled on a periodic basis.
24. The method of example 23 wherein the periodic basis is designated by the at least one established standard procedure.
25. The method of example 15 wherein reception of at least
   one specific DL signaling channel is enabled or disabled by the WTRU based on the status of each active data transmission procedure.
26. The method of example 15 wherein the data transmission sent by the WTRU includes enhanced dedicated channel (E-DCH) data that was queued in a buffer within the WTRU.
27. The method of example 15 wherein the WTRU disables reception of at least one DL signaling channel when reception of data transmission feedback information is not expected by the WTRU and reception of the at least one DL signaling channel is not required by the at least one established standard procedure.
28. The method of example 15 wherein the data transmission feedback information includes an acknowledge (ACK) message or a non-acknowledge (NACK) message.
29. The method of example 15 wherein each of the data transmission procedures is a hybrid-automatic repeat request (H-ARQ) process.
30. In a wireless communication system including a wireless transmit/receive unit (WTRU) and at least one Node-B, a method of selectively enabling reception of at least one downlink (DL) signaling channel configured between the WTRU and the Node-B, the method comprising:
   (a) the WTRU enabling reception of the DL signaling channel in order to receive expected channel allocation information from the Node-B in response to the WTRU sending a channel allocation request to the Node-B; and
   (b) the WTRU disabling reception of the specific DL signaling channel when reception of channel allocation information is not expected and when reception of the DL signaling channel is not required by at least one established standard procedure known to the WTRU.
31. In a wireless communication system including a wireless transmit/receive unit (WTRU) and at least one Node-B, a method of selectively enabling reception of at least one downlink (DL) signaling channel configured between the WTRU and the Node-B, the method comprising:
   (a) the WTRU enabling reception of the DL signaling channel in order to receive expected data transmission feedback information from the Node-B in response to the WTRU sending data to the Node-B; and
   (b) the WTRU disabling reception of the DL signaling channel when reception of data transmission feedback information is not expected and when the DL signaling channel is not required by at least one established standard procedure known to the WTRU.
32. In a wireless communication system including a wireless transmit/receive unit (WTRU) and a plurality of Node-Bs, the WTRU sending at least one channel allocation request and enhanced dedicated channel (E-DCH) data to the Node-Bs via at least one uplink (UL) channel, and the Node-Bs sending channel allocation information regarding the at least one channel allocation request and data feedback information associated with the E-DCH data to the WTRU via respective downlink (DL) signaling channels in response to receiving the channel allocation request and E-DCH data, a method comprising:
   (a) the WTRU coordinating and consolidating DL signaling channel reception requirements of a plurality of channel allocation procedures and data transmission procedures carried out by the WTRU in accordance with at least one established standard procedure known to the WTRU; and
   (b) the WTRU determining whether to enable reception of at least one specific DL signaling channel based on the consolidated DL signaling channel reception requirements.
33. In a wireless communication system including a wireless transmit/receive unit (WTRU) and a plurality of Node-Bs, the WTRU sending at least one channel allocation request to the Node-Bs via at least one uplink (UL) channel, and the Node-Bs sending channel allocation information to the WTRU via respective downlink (DL) signaling channels in response to receiving the channel allocation request, the WTRU comprising:
   (a) a standards database for storing information associated with at least one established standard procedure;
   (b) a processor in communication with the standards database, the processor for coordinating and consolidating DL signaling channel reception requirements of a plurality of channel allocation procedures carried out by the WTRU in accordance with the at least one established standard procedure to determine whether to enable reception of at least one specific DL signaling channel;
   (c) a transmitter in communication with the processor for sending the at least one channel allocation request to the Node-Bs;
   (d) a receiver in communication with the processor, the receiver for receiving the channel allocation information from the Node-Bs over the at least one DL signaling channel; and
   (e) a physical reception control entity in communication with the processor and the receiver, the physical reception control entity for enabling or disabling reception of specific ones of the DL signaling channels based on the determination made by the processor.
34. The WTRU of example 33 further comprising:
   (f) a data buffer in communication with the processor, the data buffer for queuing data.
35. The WTRU of example 34 wherein the channel allocation request sent by the WTRU includes enhanced dedicated channel (E-DCH) data that was queued in the data buffer.
36. The WTRU of example 33 wherein the processor in the WTRU controls the physical reception control entity to enable reception of at least one specific DL signaling channel during a specific radio frame or subframe.
37. The WTRU of example 33 wherein the at least one established standard procedure specifies when channel allocation information is expected to be received from at least one Node-B over the at least one specific DL signaling channel.
38. The WTRU of example 33 wherein the processor in the WTRU controls the physical reception control entity to enable reception of at least one specific DL signaling channel during at least one specific scheduled time or time period.
39. The WTRU of example 38 wherein the at least one established standard procedure designates the at least one specific scheduled time or time period.
40. The WTRU of example 33 wherein the processor in the WTRU controls the physical reception control entity to enable or disable reception of at least one specific DL signaling channel on a periodic basis.
41. The WTRU of example 40 wherein the periodic basis is designated by the at least one established standard procedure.
42. The WTRU of example 33 wherein the processor in the WTRU controls the physical reception control entity to enable or disable reception of at least one specific DL signaling channel based on the status of each active channel allocation procedures.
43. The WTRU of example 33 wherein the processor in the WTRU controls the physical reception control entity to disable reception of at least one DL signaling channel when reception of channel allocation information is not expected by the processor and reception of the at least one DL signaling channel is not required by the at least one established standard procedure.
44. The WTRU of example 33 wherein the at least one channel allocation request includes at least one traffic volume measurement (TVM) indicator.
45. In a wireless communication system including a wireless transmit/receive unit (WTRU) and a plurality of Node-Bs, the WTRU sending at least one data transmission to the Node-Bs via at least one uplink (UL) channel, and the Node-Bs sending data transmission feedback information to the WTRU via respective downlink (DL) signaling channels in response to receiving the data transmission, the WTRU comprising:
   (a) a standards database for storing information associated with at least one established standard procedure;
   (b) a processor in communication with the standards database, the processor for coordinating and consolidating DL signaling channel reception requirements of a plurality of data transmission procedures carried out by the WTRU in accordance with the at least one established standard procedure to determine whether to enable reception of at least one specific DL signaling channel;
   (c) a data buffer in communication with the processor, the data buffer for queuing data to be included in the data transmission;
   (d) a transmitter in communication with the processor for sending the at least one data transmission to the Node-Bs;
   (e) a receiver in communication with the processor, the receiver for receiving data transmission feedback information from the Node-Bs over the DL signaling channels; and
   (f) a physical reception control entity in communication with the processor and the receiver, the physical reception control entity for enabling or disabling reception of at least one specific DL signaling channel based on the determination made by the processor.
46. The WTRU of example 45 wherein the processor in the WTRU controls the physical reception control entity to enable reception of at least one specific DL signaling channel during a specific radio frame or subframe.
47. The WTRU of example 45 wherein the at least one established standard procedure specifies when data transmission feedback information is expected to be received from at least one Node-B over at least one specific DL signaling channel.
48. The WTRU of example 45 wherein the processor in the WTRU controls the physical reception control entity to enable reception of at least one specific DL signaling channel during at least one specific scheduled time or time period.
49. The WTRU of example 48 wherein the at least one established standard procedure designates the at least one specific scheduled time or time period.
50. The WTRU of example 45 wherein the processor in the WTRU controls the physical reception control entity to enable or disable reception of at least one specific DL signaling channel on a periodic basis.
51. The WTRU of example 50 wherein the periodic basis is designated by the at least one established standard procedure.
52. The WTRU of example 45 wherein the processor in the WTRU controls the physical reception control entity to enable or disable reception of at least one specific DL signaling channel based on the status of each of active data transmission procedure.
53. The WTRU of example 45 wherein the data transmission sent by the WTRU includes enhanced dedicated channel (E-DCH) data that was queued in the data buffer.
54. The WTRU of example 45 wherein the processor in the WTRU controls the physical reception control entity to disable reception of at least one DL signaling channel when reception of data transmission feedback information is not expected by the processor and reception of the at least one of the DL signaling channels is not required by the at least one established procedure.
55. The WTRU of example 45 wherein the data transmission feedback information includes an acknowledge (ACK) message or a non-acknowledge (NACK) message.
56. The WTRU of example 45 wherein the at least one data transmission procedure is a hybrid-automatic repeat request (H-ARQ) process.
57. In a wireless communication system including a wireless transmit/receive unit (WTRU) and a plurality of Node-Bs, the WTRU sending at least one channel allocation request to the Node-Bs via at least one uplink (UL) channels, and the Node-Bs sending channel allocation information to the WTRU via respective downlink (DL) signaling channels in response to receiving the channel allocation request, a method comprising:
   (a) the WTRU coordinating and consolidating DL signaling channel reception requirements of a plurality of channel allocation procedures carried out by the WTRU in accordance with at least one established standard procedure known to the WTRU; and
   (b) the WTRU determining whether to enable reception of at least one specific DL signaling channel based on the consolidated DL signaling channel reception requirements.
58. In a wireless communication system including a wireless transmit/receive unit (WTRU) and a plurality of Node-Bs, the WTRU sending at least one data transmission to the Node-Bs via at least one uplink (UL) channel, and the Node-Bs sending data transmission feedback information to the WTRU via respective downlink (DL) signaling channels in response to receiving the channel allocation request, a method comprising:
   (a) the WTRU coordinating and consolidating DL signaling channel reception requirements of a plurality of hybrid-automatic repeat request (H-ARQ) procedures carried out by the WTRU in accordance with at least one established standard procedure known to the WTRU; and
   (b) the WTRU determining whether to enable reception of at least one specific DL signaling channel based on the consolidated DL signaling channel reception requirements.
59. In a wireless communication system including a wireless transmit/receive unit (WTRU) and a plurality of Node-Bs, the WTRU sending at least one channel allocation request and data to the Node-Bs via at least one uplink (UL) channel, and the Node-Bs sending channel allocation information and data feedback information to the WTRU via respective downlink (DL) signaling channels in response to receiving the channel allocation request, a method comprising:
   (a) the WTRU coordinating and consolidating DL signaling channel reception requirements of a plurality of channel allocation and data feedback procedures carried out by the WTRU in accordance with at least one established standard procedure known to the WTRU; and
   (b) the WTRU determining whether to enable reception of at least one specific DL signaling channel based on the consolidated DL signaling channel reception requirements.
60. In a wireless communication system including a wireless transmit/receive unit (WTRU) and a plurality of Node-Bs, the WTRU including an integrated circuit (IC) for sending at least one data transmission to the Node-Bs via at least one uplink (UL) channel, and the Node-Bs sending data transmission feedback information to the WTRU via respective downlink (DL) signaling channels in response to receiving the data transmission, the IC comprising:
   (a) a standards database for storing information associated with at least one established standard procedure;
   (b) a processor in communication with the standards database, the processor for coordinating and consolidating DL signaling channel reception requirements of a plurality of data transmission procedures carried out by the WTRU in accordance with the at least one established standard procedure to determine whether to enable reception of at least one specific DL signaling channel;
   (c) a data buffer in communication with the processor, the data buffer for queuing data to be included in the data transmission;
   (d) a transmitter in communication with the processor for sending the at least one data transmission to the Node-Bs;
   (e) a receiver in communication with the processor, the receiver for receiving data transmission feedback information from the Node-Bs over the DL signaling channels; and
   (f) a physical reception control entity in communication with the processor and the receiver, the physical reception control entity for enabling or disabling reception of at least one specific DL signaling channel based on the determination made by the processor.
61. In a wireless communication system including a wireless transmit/receive unit (WTRU) and a plurality of Node-Bs, the WTRU including an integrated circuit (IC) for sending at least one channel allocation request to the Node-Bs via at least one uplink (UL) channel, and the Node-Bs sending channel allocation information to the WTRU via respective downlink (DL) signaling channels in response to receiving the channel allocation request, the IC comprising:
   (a) a standards database for storing information associated with at least one established standard procedure;
   (b) a processor in communication with the standards database, the processor for coordinating and consolidating DL signaling channel reception requirements of a plurality of channel allocation procedures carried out by the WTRU in accordance with the at least one established standard procedure to determine whether to enable reception of at least one specific DL signaling channel;
   (c) a transmitter in communication with the processor for sending the at least one channel allocation request to the Node-Bs;
   (d) a receiver in communication with the processor, the receiver for receiving the channel allocation information from the Node-Bs over the DL signaling channels; and
   (e) a physical reception control entity in communication with the processor and the receiver, the physical reception control entity for enabling or disabling reception of at least one specific DL signaling channel based on the determination made by the processor.
62. The IC of example 61 further comprising:
   (f) a data buffer in communication with the processor, the data buffer for queuing data.

Although the features and elements of the present invention are described in the preferred embodiments in particular combinations, each feature or element can be used alone without the other features and elements of the preferred embodiments or in various combinations with or without other features and elements of the present invention.

## Claims

1. A method for channel resource allocation implemented in a wireless transmit/receive unit, WTRU, comprising:
transmitting (308) enhanced dedicated channel, E-DCH, data via an uplink, UL, enhanced uplink, EU, channel;
receiving (312) data transmission feedback via a downlink, DL, EU signaling channel in response to transmitting the E-DCH data;
**characterized by**
determining (312) whether to selectively enable reception of the DL signaling channel according to at least one predetermined signaling procedure using at least one synchronous hybrid automatic repeat request, HARQ, process that enables reception of the DL EU signaling channel in accordance with a preconfigured schedule.

2. The method of claim 1 wherein the DL signaling channel is a downlink relative grant channel.

3. The method of claim 1 wherein the data transmission feedback includes an acknowledgment, ACK, or a non-acknowledgement, NACK, message.

4. The method of claim 1, further comprising:
transmitting a channel allocation request via the UL EU channel; and
selectively enabling reception of
the DL signaling channel in response to transmitting the channel allocation request in order to receive expected channel allocation information.

5. The method of claim 4, further comprising:
selectively disabling reception of the DL signaling channel on a condition that reception of the channel allocation information is not expected.

6. The method of claim 1, further comprising:
selectively enabling reception of the DL signaling channel in response to transmitting the E-DCH data in order to receive expected data transmission feedback information.

7. The method of claim 6, further comprising:
selectively disabling reception of the DL signaling channel on a condition that reception of the data transmission feedback information is not expected.

8. A wireless transmit/receive unit, WTRU, comprising:
means for transmitting (118) enhanced dedicated channel, E-DCH, data via an uplink, UL, enhanced uplink, EU, channel;
means for receiving (114, 116) data transmission feedback via a respective downlink, DL, EU signaling channel in response to transmitting the E-DCH data; **characterized in that** the WTRU further comprises
means for determining (120) whether to selectively enable reception of the DL signaling channel according to at least one predetermined signaling procedure procedure using at least one synchronous hybrid automatic repeat request, HARQ, process that enables reception of the DL EU signaling channel in accordance with a preconfigured schedule.

9. The WTRU of claim 8 wherein the downlink signaling channel is a downlink relative grant channel.

10. The WTRU of claim 8 wherein the data transmission feedback includes an acknowledgement, ACK, message or a non-acknowledgement, NACK, message.

11. The WTRU of claim 8, further comprising:
means for transmitting a channel allocation request via the UL EU channel; and
means for selectively enabling reception of the DL signaling channel in response to transmitting the channel allocation request in order to receive expected channel allocation information.

12. The WTRU of claim 11, further comprising:
means for selectively disabling reception of the DL signaling channel on a condition that reception of the channel allocation information is not expected.

13. The WTRU of claim 8, further comprising:
means for selectively enabling reception of the DL signaling channel in response to transmitting the E-DCH data in order to receive expected data transmission feedback information.

14. The WTRU of claim 13, further comprising:
means for selectively disabling reception of the DL signaling channel on a condition that reception of the data transmission feedback information is not expected.

## Patentansprüche

1. Verfahren zur Kanalressourcenzuweisung, das in einer Drahtlos-Sende- und -Empfangseinheit (Wireless Transmit/Receive Unit, WTRU) implementiert wird, und das Folgendes umfasst:
Senden (308) von Enhanced Dedicated Channel (E-DCH)-Daten über einen Uplink (UL) Enhanced Uplink (EU)-Kanal,
Empfangen (312) einer Datenübertragungsrückmeldung über einen Downlink (DL) EU-Zeichengabekanal in Reaktion auf das Senden der E-DCH-Daten;
**gekennzeichnet durch**
Bestimmen (312), ob selektiv das Empfangen des DL-Zeichengabekanals gemäß mindestens einem vorgegebenen Zeichengabeverfahren, das mindestens einen synchronen Hybrid Automatic Repeat Request (HARQ)-Prozess verwendet, ermöglicht werden soll, der den Empfang des DL EU-Zeichengabekanals gemäß einem vorkonfigurierten Plan ermöglicht.

2. Verfahren nach Anspruch 1, wobei der DL-Zeichengabekanal ein Downlink Relative Grant Channel ist.

3. Verfahren nach Anspruch 1, wobei die Datenübertragungsrückmeldung eine Acknowledgment (ACK)- oder eine Non-Acknowledgement (NACK)-Nachricht enthält.

4. Verfahren nach Anspruch 1, das des Weiteren Folgendes umfasst:
Senden einer Kanalzuweisungsanforderung über den UL EU-Kanal; und
selektives Ermöglichen des Empfangs des DL-Zeichengabekanals in Reaktion auf das Senden der Kanalzuweisungsanforderung, um erwartete Kanalzuweisungsinformationen zu empfangen.

5. Verfahren nach Anspruch 4, das des Weiteren Folgendes umfasst:
selektives Deaktivieren des Empfangs des DL-Zeichengabekanals unter der Bedingung, dass der Empfang der Kanalzuweisungsinformationen nicht erwartet wird.

6. Verfahren nach Anspruch 1, das des Weiteren Folgendes umfasst:
selektives Ermöglichen des Empfangs des DL-Zeichengabekanals in Reaktion auf das Senden der E-DCH-Daten, um erwartete Datenübertragungsrückmeldungsinformationen zu empfangen.

7. Verfahren nach Anspruch 6, das des Weiteren Folgendes umfasst:
selektives Deaktivieren des Empfangs des DL-Zeichengabekanals unter der Bedingung, dass der Empfang der Datenübertragungsrückmeldungsinformationen nicht erwartet wird.

8. Drahtlos-Sende- und -Empfangseinheit (Wireless Transmit/Receive Unit, WTRU), die Folgendes umfasst:
ein Mittel zum Senden (118) von Enhanced Dedicated Channel (E-DCH)-Daten über einen Uplink (UL) Enhanced Uplink (EU)-Kanal;
ein Mittel zum Empfangen (114, 116) einer Datenübertragungsrückmeldung über einen Downlink (DL) EU-Zeichengabekanal in Reaktion auf das Senden der E-DCH-Daten;
**dadurch gekennzeichnet, dass** die WTRU des Weiteren Folgendes umfasst:
ein Mittel zum Bestimmen (120), ob selektiv das Empfangen des DL-Zeichengabekanals gemäß mindestens einem vorgegebenen Zeichengabeverfahren, das mindestens einen synchronen Hybrid Automatic Repeat Request (HARQ)-Prozess verwendet, ermöglicht werden soll, der den Empfang des DL EU-Zeichengabekanals gemäß einem vorkonfigurierten Plan ermöglicht.

9. WTRU nach Anspruch 8, wobei der Downlink-Zeichengabekanal ein Downlink Relative Grant Channel ist.

10. WTRU nach Anspruch 8, wobei die Datenübertragungsrückmeldung eine Acknowledgment (ACK)-Nachricht oder eine Non-Acknowledgement (NACK)-Nachricht enthält.

11. WTRU nach Anspruch 8, die des Weiteren Folgendes umfasst:
ein Mittel zum Senden einer Kanalzuweisungsanforderung über den UL EU-Kanal; und
ein Mittel zum selektiven Ermöglichen des Empfangs des DL-Zeichengabekanals in Reaktion auf das Senden der Kanalzuweisungsanforderung, um erwartete Kanalzuweisungsinformationen zu empfangen.

12. WTRU nach Anspruch 11, die des Weiteren Folgendes umfasst:
ein Mittel zum selektiven Deaktivieren des Empfangs des DL-Zeichengabekanals unter der Bedingung, dass der Empfang der Kanalzuweisungsinformationen nicht erwartet wird.

13. WTRU nach Anspruch 8, die des Weiteren Folgendes umfasst:
ein Mittel zum selektiven Ermöglichen des Empfangs des DL-Zeichengabekanals in Reaktion auf das Senden der E-DCH-Daten, um erwartete Datenübertragungsrückmeldungsinformationen zu empfangen.

14. WTRU nach Anspruch 13, die des Weiteren Folgendes umfasst:
ein Mittel zum selektiven Deaktivieren des Empfangs des DL-Zeichengabekanals unter der Bedingung, dass der Empfang der Datenübertragungsrückmeldungsinformationen nicht erwartet wird.

## Revendications

1. Procédé d'allocation de ressources de canal mis en oeuvre dans une unité émettrice-réceptrice sans fil, WTRU, comprenant :
la transmission (308) de données de canal dédié amélioré, E-DCH, par l'intermédiaire d'un canal de liaison montante améliorée, EU, de liaison montante, UL ;
la réception (312) d'une rétroaction de transmission de données par l'intermédiaire d'un canal de signalisation EU de liaison descendante, DL, en réponse à la transmission des données E-DCH ;
**caractérisé par**
la détermination (312) s'il faut activer sélectivement la réception du canal de signalisation DL en fonction d'au moins une procédure de signalisation prédéterminée en utilisant au moins un processus de demande de répétition automatique hybride, HARQ, synchrone qui permet la réception du canal de signalisation EU DL selon un planning préconfiguré.

2. Procédé selon la revendication 1, dans lequel le canal de signalisation DL est un canal d'octroi relatif de liaison descendante.

3. Procédé selon la revendication 1, dans lequel la rétroaction de transmission de données comprend un message d'accusé de réception, ACK, ou un message de non-accusé de réception, NACK.

4. Procédé selon la revendication 1, comprenant en outre :
la transmission d'une demande d'allocation de canal par l'intermédiaire du canal EU UL ; et
l'activation sélective de la réception du canal de signalisation DL en réponse à la transmission de la demande d'allocation de canal afin de recevoir des informations d'allocation de canal prévues.

5. Procédé selon la revendication 4, comprenant en outre :
la désactivation sélective de la réception du canal de signalisation DL à condition que la réception des informations d'allocation de canal ne soit pas prévue.

6. Procédé selon la revendication 1, comprenant en outre :
l'activation sélective de la réception du canal de signalisation DL en réponse à la transmission des données E-DCH afin de recevoir des informations de rétroaction de transmission de données prévues.

7. Procédé selon la revendication 6, comprenant en outre :
la désactivation sélective de la réception du canal de signalisation DL à condition que la réception des informations de rétroaction de transmission de données ne soit pas prévue.

8. Unité émettrice-réceptrice sans fil, WTRU, comprenant :
un moyen de transmission (118) de données de canal dédié amélioré, E-DCH, par l'intermédiaire d'un canal de liaison montante améliorée, EU, de liaison montante, UL ;
un moyen de réception (114, 116) d'une rétroaction de transmission de données par l'intermédiaire d'un canal de signalisation EU de liaison descendante, DL, respectif en réponse à la transmission des données E-DCH ;
**caractérisée en ce que** la WTRU comprend en outre :
un moyen de détermination (120) s'il faut activer sélectivement la réception du canal de signalisation DL en fonction d'au moins une procédure de signalisation prédéterminée en utilisant au moins un processus de demande de répétition automatique hybride, HARQ, synchrone qui permet la réception du canal de signalisation EU DL selon un planning préconfiguré.

9. WTRU selon la revendication 8, dans laquelle le canal de signalisation de liaison descendante est un canal d'octroi relatif de liaison descendante.

10. WTRU selon la revendication 8, dans laquelle la rétroaction de transmission de données comprend un message d'accusé de réception, ACK, ou un message de non-accusé de réception, NACK.

11. WTRU selon la revendication 8, comprenant en outre :
un moyen de transmission d'une demande d'allocation de canal par l'intermédiaire du canal EU UL ; et
un moyen d'activation sélective de la réception du canal de signalisation DL en réponse à la transmission de la demande d'allocation de canal afin de recevoir des informations d'allocation de canal prévues.

12. WTRU selon la revendication 11, comprenant en outre :
un moyen de désactivation sélective de la réception du canal de signalisation DL à condition que la réception des informations d'allocation de canal ne soit pas prévue.

13. WTRU selon la revendication 8, comprenant en outre :
un moyen d'activation sélective de la réception du canal de signalisation DL en réponse à la transmission des données E-DCH afin de recevoir des informations de rétroaction de transmission de données prévues.

14. WTRU selon la revendication 13, comprenant en outre :
un moyen de désactivation sélective de la réception du canal de signalisation DL à condition que la réception des informations de rétroaction de transmission de données ne soit pas prévue.
